# EUROPEAN PATENT SPECIFICATION

(11) **EP 3 349 098 B1**
(45) Date of publication and mention of the grant of the patent: **14.09.2022**
(21) Application number: 16862345.2
(22) Date of filing: 28.10.2016
(51) Int. Cl.: G06F 3/01, G06F 3/041, G06F 3/0484, G06F 3/0488

(54) **ELECTRONIC DEVICE AND OPERATION METHOD THEREFOR**
ELEKTRONISCHE VORRICHTUNG UND BETRIEBSVERFAHREN DAFÜR
DISPOSITIF ÉLECTRONIQUE ET SON PROCÉDÉ DE FONCTIONNEMENT

(30) Priority: 04.11.2015 KR 20150154365
(43) Date of publication of application: 18.07.2018
(73) Proprietor: Samsung Electronics Co., Ltd., Suwon-si, Gyeonggi-do 16677 (KR)
(72) Inventor: KIM, Namhoi, Suwon-si Gyeonggi-do 16509 (KR); PARK, Seongwoong, Seoul 06276 (KR); NAM, Sanghyuck, Seoul 07072 (KR); LEE, Saerom, Seoul 01403 (KR)
(74) Representative: HGF
(86) International application number: PCT/KR2016/012224
(87) International publication number: WO 2017/078329

(56) References cited:
- WO-A1-2015/078350
- WO-A1-2015/101105
- KR-A- 20110 133 373
- KR-A- 20110 133 373
- KR-A- 20120 109 027
- KR-A- 20140 042 578
- KR-B1- 101 559 091
- US-A1- 2007 293 188
- US-A1- 2008 159 547
- US-A1- 2012 242 617
- US-A1- 2013 222 287
- US-A1- 2013 222 287
- US-A1- 2014 092 119
- US-A1- 2014 198 057
- US-A1- 2014 362 008
- US-A1- 2014 375 608
- US-A1- 2015 138 122

## Description

### Technical Field

The present invention relates to an electronic device and an operation method therefor.

### Background Art

With advances of an electronic device, users can use various contents using the electronic device. In particular, when using content such as game content or video content in the electronic device, the users hold the electronic device in a landscape mode and use the content on a wider screen in many cases, for the sake of more realistic content use.

US 2012/242617 A1 discloses a mis-touch avoidance method and apparatus for preventing an unintended touch made by a user's grip from causing malfunction of a mobile terminal. The method includes detecting a touch on the touchscreen, determining if the touch is an unintended touch made by the user's grip, and recalibrating a reference value for touch recognition when the touch is unintended.

US 2014/375608 discloses a touch panel system preventing incorrect operation caused by an unintended contact with a touch panel without affecting touch sensitivity by determining if a touch lasts more than a predetermined time period. US 2013/022287 discloses an apparatus and method for determining whether a touch is detected in a display area or grip recognition area and determining the validity of the touch based on its location.

US 2014/0092119 discloses a method of controlling a screen brightness by determining an illumination when a display unit is turned on, determining an optimal brightness, and controlling a screen display according to the optimal brightness. US 2015/0138122 discloses a method for controlling brightness when a user of a portable electronic device is using an input unit such as a haptic pen, by determining if the touch of the hand is closer to an illuminance sensor than the haptic pen touch. US 2014/0362008 discloses a terminal including a light modulation unit to perform automatic light modulation of a touch panel in dependence on if an operation of a touch panel occurs near an illuminance sensor.

US 2008/0159547 discloses a method for monitoring and reporting SPL exposure, by measuring a SPL of the surrounding environment, storing the measurement in memory and producing an SPL exposure record to display to the user, including notifying the user when the sound exposure exceeds a threshold.

WO 2015/101105 A1 discloses that for a touch screen it is detected whether the sound-making effect of a loudspeaker array is influenced for instance by a finger with which the user touches the touch input unit. A compensation module may perform compensation effectively.

US 2014/0198057 A1 discloses an apparatus and method for adjusting a display of a portable electronic device having a display unit are provided. The method includes detecting a user's touch of the portable electronic device, determining touch information including at least one of a location and an area of the user's touch on the display unit, determining whether the user's touch is a touch input for executing an operation on the portable electronic device or a user's gripping of the portable electronic device according to the touch information, and adjusting the displaying of a User Interface (UI) according to the user's gripping of the portable electronic device, wherein an entirety of an outward facing surface of the display unit is touch-enabled so as to receive a touch input of a user at any point of the outward facing surface.

### Disclosure of Invention

### Technical Problem

As above, while holding an electronic device in a landscape mode and using content, a user may touch a touch key of the electronic device with a hand holding the electronic device regardless of his/her intention. In this case, the electronic device executes a function corresponding to the touched touch key and, as a result, the content execution can be interrupted.

Also, while holding the electronic device in the landscape mode and using content, the hand holding the electronic device can cover an illuminance sensor of the electronic device regardless of a user's intention. In this case, in response to the covered illuminance sensor, the electronic device adjusts brightness of a display unit of the electronic device and thus the content is displayed dimly.

Also, while holding the electronic device in the landscape mode and using content, the hand holding the electronic device can cover a speaker of the electronic device regardless of a user's intention. In this case, since the speaker is covered by the hand, the user can experience as if volume of sound data corresponding to the content is reduced. Various embodiments of the present invention for solving such conventional problems provide an electronic device and its operation method for preventing malfunctions due to interruption of content execution, brightness control of the display unit, or the volume reduction of the sound data, even when the hand holding the electronic device which is executing content in the landscape mode covers the touch key, the illuminance sensor, or the speaker.

### Solution to Problem

It is proposed a method in accordance to appended independent claim 1 and an electronic device in accordance to appended independent claim 6. Preferred embodiments are defined in the appended dependent claims.

### Advantageous Effects of Invention

As set forth above, an electronic device and its operation method of the present invention can prevent malfunctions of the electronic device due to interruption of content execution, brightness control of a display unit, or volume reduction of sound data, even when a hand holding the electronic device which is executing content in a landscape mode grabs a touch key, am illuminance sensor, or a speaker.

### Brief Description of Drawings

FIG. 1 is a diagram of a screen of an electronic device according to an embodiment of the present invention.
FIG. 2 is a diagram of a screen of an electronic device in a grip state according to an embodiment of the present invention.
FIG. 3 is a diagram of a screen of an electronic device according to another embodiment of the present invention.
FIG. 4 is a diagram of a screen of an electronic device in a grip state according to another embodiment of the present invention.
FIG. 5 is a block diagram of a main configuration of an electronic device according to an embodiment of the present invention.
FIG. 6 is a flowchart of an operation method of an electronic device according to an embodiment of the present invention.
FIG. 7 is a flowchart of an operation method for applying a reference value according to a grip according to an embodiment of the present invention.
FIG. 8 is a flowchart of an operation method for controlling an electronic device according to a reference value applied according to an embodiment of the present invention.
FIG. 9 is a flowchart of an operation method for applying a reference value according to a grip according to another embodiment of the present invention.
FIG. 10 is a flowchart of an operation method for controlling an electronic device according to a reference value applied according to another embodiment of the present invention.

### Best Mode for Carrying out the Invention

Hereinafter, embodiments of the present invention shall be explained in more detail by referring to the attached drawings. It should be noted that like components in the accompanying drawings are indicated by like reference numerals.

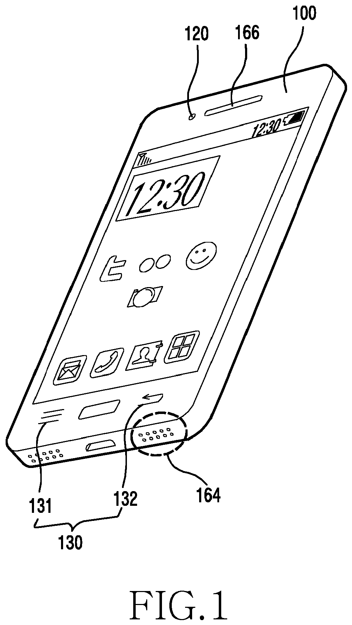

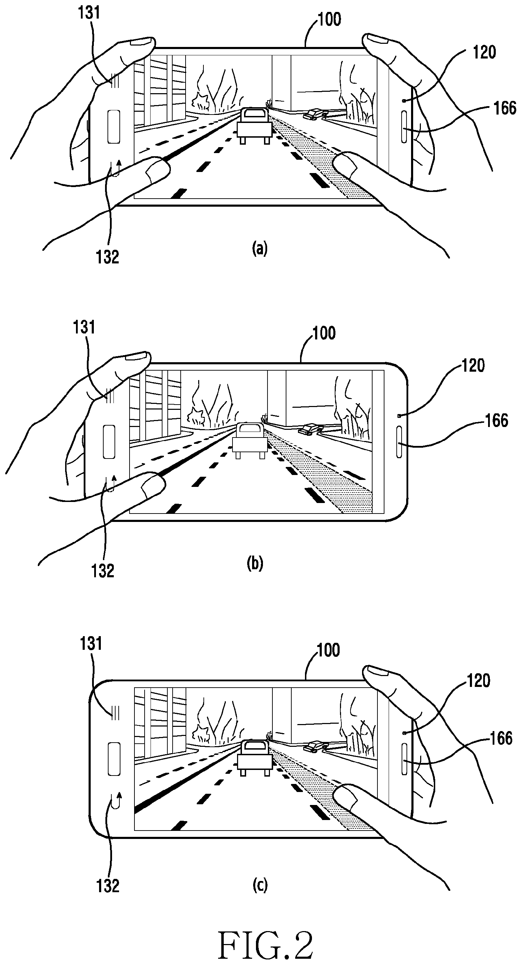

FIG. 1 is a diagram of a screen of an electronic device according to an embodiment of the present invention. FIG. 2 is a diagram of a screen of an electronic device in a grip state according to an embodiment of the present invention.

Referring to FIG. 1 and FIG. 2, an electronic device 100 can include an illuminance sensor 120, a touch key 130, a speaker 164, and a receiver 166. The touch key 130 can include a menu key 131 and a back key 132. A user can switch the electronic device 100 to a landscape mode as shown in FIG. 2, and use content while holding the electronic device 100 in the landscape mode.

In general, when the touch key 130 is input (e.g., touched) during content execution, the electronic device 100 stops the executed content and performs a function corresponding to the input. When the illuminance sensor 120 is covered and no light is detected in the content execution, the electronic device 100 decreases brightness of a screen. When the speaker 164 is covered due to the grip of the electronic device 100 in the content execution, the user can feel as if volume of sound data of the content is reduced.

When the electronic device 100 is in the landscape mode and a two-direction grip, for example, a two-hand grip is detected as shown in FIG. 2A, the electronic device 100 can apply an input reference value for the touch key 130, a reference value for the illuminance sensor 120, and a sound pressure reference value detected at the speaker 164. In so doing, the electronic device 100 can identify the landscape mode of the electronic device 100, using a sensor such as a gyro sensor of the electronic device 100. The electronic device 100 can identify information on the content and determine that the content is content optimized to the landscape mode. Hence, when the running content is the content optimized to the landscape mode, the electronic device 100 can identify that the electronic device 100 is in the landscape mode.

By changing the input reference value for the touch key 130, the electronic device 100 may not perform a function of the input of the touch key 130, which can occur regardless of a user's intention. By deactivating the illuminance sensor 120, the electronic device 100 may not adjust the brightness of the screen in the content execution even when the illuminance sensor 120 is covered by the grip. By changing the sound pressure reference value, when a sound pressure value detected at the speaker 164 which is covered by the grip exceeds the sound pressure reference value, the electronic device 100 can output sound data for the content to the receiver 166 of the electronic device 100. Hence, it is possible to compensate for the volume reduction to the user who feels as if the volume of the sound data is reduced due to the covered speaker 164.

When the electronic device 100 is in the landscape mode and a first direction grip is detected as shown in FIG. 2B, the electronic device 100 can apply the input reference value for the touch key 130 and the sound pressure reference value detected at the speaker 164. When the electronic device 100 is in the landscape mode and a second direction grip is detected as shown in FIG. 2C, the electronic device 100 can deactivate the illuminance sensor 120 by applying the reference value to the illuminance sensor 120.

In the present invention, the state where a user's left hand holds a region of the touch key 130 in the electronic device 100 as shown in FIG. 2B is described as the first direction grip, and the state where a user's right hand holds a region of the illuminance sensor 120 in the electronic device 100 as shown in FIG. 2C is described as the second direction grip. However, the present invention is not limited those, a state where the user's left hand holds the region of the illuminance sensor 120 in the electronic device 100 can be the first direction grip, and a state where the user's left hand holds the region of the touch key 130 in the electronic device 100 can be the second direction grip.

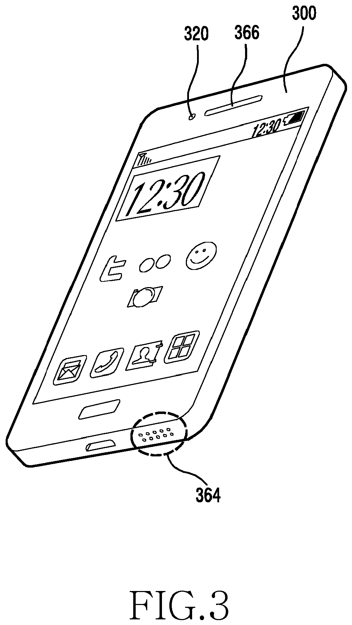

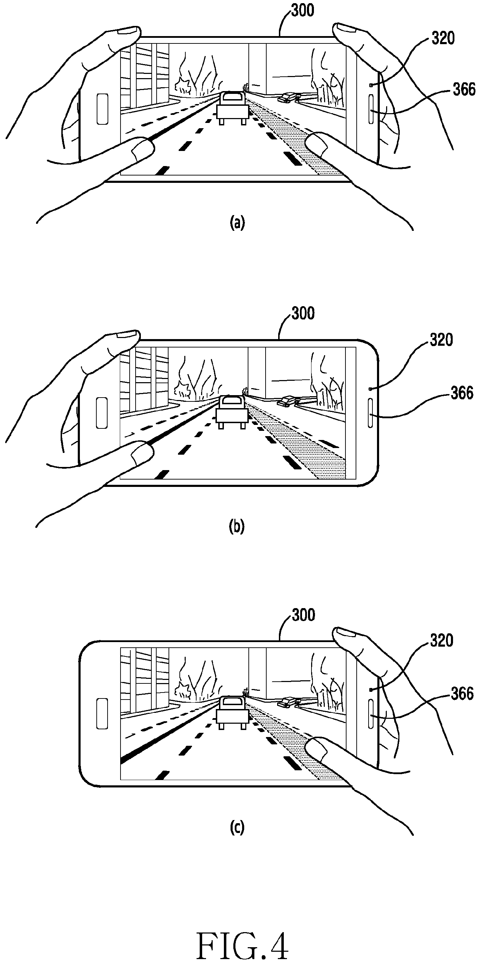

FIG. 3 is a diagram of a screen of an electronic device according to another embodiment of the present invention. FIG. 4 is a diagram of a screen of an electronic device in a grip state according to another embodiment of the present invention.

Referring to FIG. 3 and FIG. 4, an electronic device 300 can include an illuminance sensor 320, a speaker 364, and a receiver 366. A user can switch the electronic device 300 to a landscape mode and use content while holding the electronic device 300 in the landscape mode as shown in FIG. 4.

In general, when the illuminance sensor 120 is covered and no light is detected during content execution, the electronic device 300 decreases brightness of a screen. When the speaker 364 is covered due to the grip of the electronic device 300 in the content execution, the user can feel as if volume of sound data for the content is reduced.

When the electronic device 300 is in the landscape mode and a two-direction grip, for example, a two-hand grip is detected as shown in FIG. 4A, the electronic device 300 can apply a reference value for the illuminance sensor 320 and a sound pressure reference value detected at the speaker 364. At this time, the electronic device 300 can identify the landscape mode of the electronic device 300, using a sensor such as a gyro sensor of the electronic device 300. The electronic device 300 can identify information on the content and determine that the content is content optimized to the landscape mode. Hence, when the executed content is the content optimized to the landscape mode, the electronic device 300 can identify that the electronic device 300 is in the landscape mode.

By deactivating the illuminance sensor 320, the electronic device 300 may not adjust the brightness of the screen in the content execution even when the illuminance sensor 320 is covered by the grip. By changing the sound pressure reference value, when a sound pressure value detected at the speaker 364 which is covered by the grip exceeds the sound pressure reference value, the electronic device 300 can output sound data for the content to the receiver 366. Hence, it is possible to compensate for the volume reduction to the user who feels as if the volume of the sound data is reduced due to the covered speaker 364.

When the electronic device 300 is in the landscape mode and the first direction grip is detected as shown in FIG. 4B, the electronic device 300 can apply the sound pressure reference value detected at the speaker 364. When the electronic device 300 is in the landscape mode and the second direction grip is detected as shown in FIG. 4C, the electronic device 300 can deactivate the illuminance sensor 320 by applying the reference value for the illuminance sensor 320.

In the present invention, the state where the user's left hand grips a region of the speaker 364 in the electronic device 300 as shown in FIG. 4B is described as the first direction grip, and the state where the user's right hand grips a region of the illuminance sensor 320 in the electronic device 300 as shown in FIG. 4C is described as the second direction grip. However, the present invention is not limited those, a state where the user's left hand holds the region of the illuminance sensor 320 in the electronic device 300 can be the first direction grip, and a state where the user's left hand holds the region of the speaker 364 in the electronic device 300 can be the second direction grip.

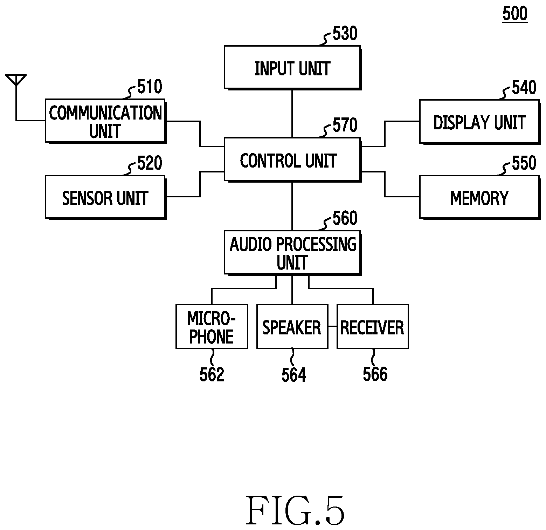

FIG. 5 is a block diagram of a main configuration of an electronic device according to an embodiment of the present invention.

Referring to FIG. 5, an electronic device 500 according to the present invention can include a communication unit 510, a sensor unit 520, an input unit 530, a display unit 540, a memory 550, a microphone 562, an audio processing unit 560, a speaker 564, a receiver 566, and a control unit 570. At this time, the electronic device 500 can be identical with the electronic device 100 of FIG. 1 and FIG. 2, and with the electronic device 300 of FIG. 3 and FIG. 4.

The communication unit 510 can communicate with at least one external device (not shown) including a portable electronic device such as a smart phone and a tablet, and an electronic device such as a notebook computer. In this case, the communication unit 510 can communicate with an external device using various communication methods. The communication unit 510 can perform at least one of wireless communication or wired communication. The communication unit 510 can be connected to at least one of a mobile communication network or a data communications network. The communication unit 510 can perform short distance wireless communication such as Bluetooth.

The sensor unit 520 can, for example, measure a physical quantity or detect an operation state of the electronic device 500 and thus convert the measured or detected information to an electrical signal. The sensor unit 520 can include, for example, at least one of a gesture sensor, a gyro sensor, a pressure sensor, a magnetic sensor, an acceleration sensor, a grip sensor, a proximity sensor, a pressure sensor, a color sensor (e.g., red, green, blue (RGB) sensor), a biometric sensor, a temperature/humidity sensor, an illuminance sensor (e.g., the illuminance sensor 120 of FIG. 1 and FIG. 2 or the illuminance sensor 320 of FIG. 3 and FIG. 4), an Ultra Violet (UV) sensor, or a sound pressure sensor which detects the sound pressure of the speaker. Additionally or alternatively, the sensor unit 520 can include, for example, an E-nose sensor, an Electromyography (EMG) sensor, an Electroencephalogram (EEG) sensor, an Electrocardiogram (ECG) sensor, an InfraRed (IR) sensor, an iris sensor, and/or a fingerprint sensor. The sensor unit 520 can further include a control circuit for controlling at least one or more sensors therein.

The input unit 530 can generate an input data in response to a user input of the electronic device 500. The input unit 530 can include at least one input means. The input unit 530 can include a keypad, a dome switch, a touch panel, a jog & shuttle, a sensor, a touch key (e.g., the touch key 130 of FIG. 1 and FIG. 2), and a button including a home button.

The display unit 540 can display the screen according to the operation of the electronic device 500. The display unit 540 can include a Liquid Crystal Display (LCD), a Light Emitting Diode (LED) display, an Organic LED (OLED) display, a Micro Electro Mechanical Systems (MEMS) display, and an electronic paper display. The display unit 540 can be combined with the input unit 530 to implement as a touch screen.

The memory 550 can include, for example, an internal memory or an external memory. The internal memory can include, for example, at least one of a volatile memory (e.g., Dynamic Random Access Memory (DRAM), Static RAM (SRAM), or Synchronous Dynamic RAM (SDRAM)), and a non-volatile memory (e.g., One Time Programmable ROM (OTPROM), Programmable ROM (PROM), Erasable and Programmable ROM (EPROM), Electrically Erasable and Programmable ROM (EEPROM), mask ROM, flash ROM, flash memory (e.g., NAND flash or NOR flash), hard drive, or Solid State Drive (SSD)).

The external memory can include flash drive, for example, Compact Flash (CF), Secure Digital (SD), micro SD, mini SD, extreme digital (xD), Multi-Media Card (MMC), or memory stick. The external memory can be functionally and/or physically connected to the electronic device through various interfaces.

The memory 550 can store operation programs of the electronic device 500. The memory 550 can store reference values for controlling the operations of the electronic device 500. The memory 550 can store various applications such as game content. The game content stored in the memory 550 can include information about whether the content is optimized to the landscape mode.

The audio processing unit 560 can, for example, convert sound and the electric signal in both directions. The audio processing unit 560 can, for example, process sound information which is input or output through the speaker 564 (e.g., the speaker 164 of FIG. 1 and FIG. 2 or the speaker 364 of FIG. 3 and FIG. 4), the receiver 566 (e.g., the receiver 166 of FIG. 1 and FIG. 2 or the receiver 366 of FIG. 3 and FIG. 4), an earphone, or the microphone 562.

The control unit 570 can execute the content in the landscape mode in response to a content execution signal, and identify the grip region of the electronic device 500. The control unit 570 can change a reference value for an input sensor according to a grip direction detected in the landscape mode. In so doing, the input sensor can indicate the illuminance sensor or the pressure sensor of the sensor unit 520. In addition, the illuminance sensor can be formed by integrating with a proximity sensor.

The control unit 570 can identify the landscape mode of the electronic device 500 based on sensing information provided from the gyro sensor of the electronic device 500. The control unit 570 can identify information on the content corresponding to an execution request signal and thus determine whether content corresponding to the execution request is optimized to the landscape mode. When the content corresponding to the execution request signal is optimized to the landscape mode, the control unit 500 can identify that the electronic device 500 is in the landscape mode. In so doing, the control unit 570 can receive information about the content corresponding to the execution request signal in a game content list managed by an external device, by communicating with the external device (e.g., a server). The control unit 570 can synchronize with the external device upon receiving the execution request signal, and synchronize with the external device on a periodic basis. Thus, the control unit 570 can determine whether the content corresponding to the execution request signal is the content optimized to the landscape mode.

According to an embodiment, the control unit 570 of the electronic device 500 (e.g., the electronic device 100 of FIG. 1 and FIG. 2) can execute content according to the content execution signal. The control unit 570 can identify the landscape mode of the electronic device 500 which executes the content, and detect the grip direction of the electronic device 500.

According to the sensing result, the control unit 570 can change and apply at least one of the input reference value for the pressure sensor, the reference value for the illuminance sensor, and the sound pressure reference value detected at the speaker 564. When detecting the two-direction grip, the control unit 570 can change and apply all of the input reference value for the pressure sensor, the reference value for the illuminance sensor, and the sound pressure reference value detected at the speaker 564. When detecting the first direction grip, the control unit 570 can change and apply the input reference value for the pressure sensor and the sound pressure reference value detected at the speaker 564. When detecting the second direction grip, the control unit 570 can change and apply the reference value for the illuminance sensor.

In so doing, the control unit 570 can change the input reference value, for example, from 3000 to 10000. The control unit 570 can change the reference value of the illuminance sensor to zero by deactivating the illuminance sensor. The control unit 570 can change the sound pressure reference value from zero to the reference value having a specific threshold. The control unit 570 can control the operation of the electronic device 500 with the applied reference value during the content execution. At this time, the pressure sensor can be formed at a location corresponding to the touch key 130, and at edges of the display unit 540 to sense an input value according to an input occurring at the touch key 130.

According to another embodiment, the control unit 570 of the electronic device 500 (e.g., the electronic device 300 of FIG. 3 and FIG. 4) can execute content according to the content execution signal. The control unit 570 can identify the landscape mode of the electronic device 500 which executes the content, and detect the grip direction of the electronic device 500.

According to the sensing result, the control unit 570 can change and apply at least one of the reference value for the illuminance sensor and the sound pressure reference value detected at the speaker 564. When detecting the two-direction grip, the control unit 570 can change and apply both of the reference value for the illuminance sensor and the sound pressure reference value detected at the speaker 564. When detecting the first direction grip, the control unit 570 can change and apply the sound pressure reference value detected at the speaker 564. When detecting the second direction grip, the control unit 570 can change and apply the reference value for the illuminance sensor.

In so doing, the control unit 570 can change the reference value of the illuminance sensor to zero by deactivating the illuminance sensor. The control unit 570 can change the sound pressure reference value from zero to the reference value having a specific threshold. According to the sensing result, the control unit 570 can apply the reference value for the illuminance sensor and the sound pressure reference value detected at the speaker 564. The control unit 570 can control the operation of the electronic device 500 with the applied reference value during the content execution.

Even when the illuminance sensor is covered in the grip of the electronic device 500, the control unit 570 can maintain the brightness of the screen on which the content is executed. Also, when volume of sound content for the content is decreased by the grip, the control unit 570 can output sound content through the receiver 566 so that the user can compensate for sensitivity of the volume of the sound content. According to an embodiment, when the electronic device 500 includes a touch key, the control unit 570 can detect an input occurring at the touch key according to the grip of the electronic device 500. When an input value of the input falls below the input reference value, the control unit 570 can continuously execute the content by ignoring a function corresponding to the touch key.

The electronic device 500 according to an embodiment can include the sensor unit 520 including at least one input sensor positioned in a grip region of the electronic device 500, and the control unit 570 for executing content in a landscape mode, identifying the grip region, and changing a reference value for the input sensor.

The control unit 570 can control the electronic device 500 with the changed reference value of the electronic device 500.

The control unit 5710 can detect a grip in the identified grip region.

The input sensor can include an illuminance sensor, and the control unit 570 can deactivate the illuminance sensor.

the input sensor can include at least one touch key, and the control unit 570 can change an input reference value for the touch key.

The electronic device 500 can include the speaker 564, the input sensor can include a sensor which detects sound pressure of the speaker 564, and the control unit 570 can change a sound pressure reference value for the sound pressure of the speaker 564.

The electronic device 500 can further include the display unit 540, and the control unit 570 can maintain brightness of the display unit 540 according to deactivation of the illuminance sensor.

The control unit 570 can detect an input of the touch key, and ignore the input when an input value detected at the touch key falls below the input reference value.

The control unit 570 can further include the receiver 566, and can detect a change of a sound pressure value at the speaker 564 and outputs sound data of the content when the sound pressure value exceeds the sound pressure reference value.

The control unit 570 can identify the landscape mode using at least one of information on the content or sensing information acquired by the sensor unit 520.

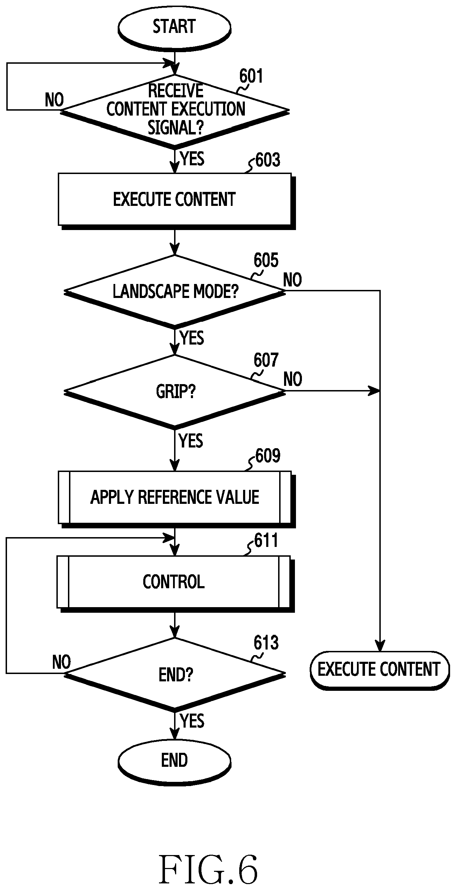

FIG. 6 is a flowchart of an operation method of an electronic device according to an embodiment of the present invention.

Referring to FIG. 6, the control unit 570 determines whether a content execution signal is received in operation 601. When receiving the content execution signal in operation 601, the control unit 570 can perform operation 603. When not receiving the content execution signal in operation 601, the control unit 570 can wait to receive the content execution signal.

In operation 603, the control unit 570 can execute content corresponding to the execution signal. At this time, the executed content can be game content. In operation 605, the control unit 570 can determine whether the electronic device 500 is in a landscape mode. In so doing, the control unit 570 can determine whether the electronic device 500 is in the landscape mode, using sensing information obtained by a gyro sensor of the sensor unit 520. The control unit 570 can identify content optimized for the landscape mode of the electronic device 500, based on information (e.g., screen configuration pixel information of the content) of the executed content. The control unit 570 can identify the information on the content from a game content list managed by an external device, by communicating with the external device.

When the electronic device 500 is in the landscape mode in operation 605 or the executed content is the content optimized for the landscape mode, the control unit 570 can perform operation 607. When the electronic device 500 is not in the landscape mode in operation 605 or the executed content is not the content optimized for the landscape mode, the control unit 570 can execute content corresponding to an execution signal received when the electronic device 500 is in a portrait mode.

In operation 607, the control unit 570 can detect whether the electronic device 500 in the landscape mode is gripped. The control unit 570 can detect the grip using sensing information of a touch sensor or a pressure sensor of the sensor unit 520. When detecting the grip in operation 607, the control unit 570 can perform operation 609. When not detecting the grip in operation 607, the control unit 570 can execute content corresponding to the execution signal received in operation 601.

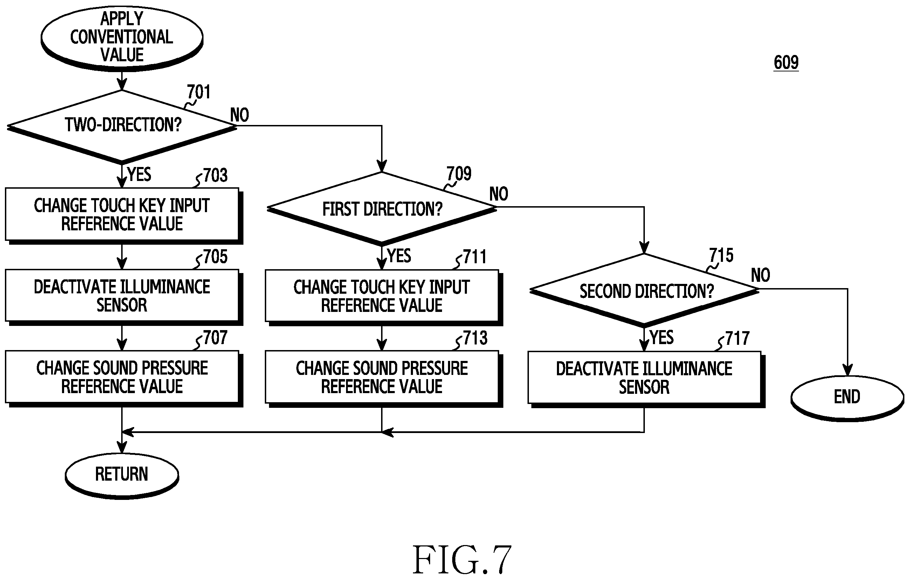

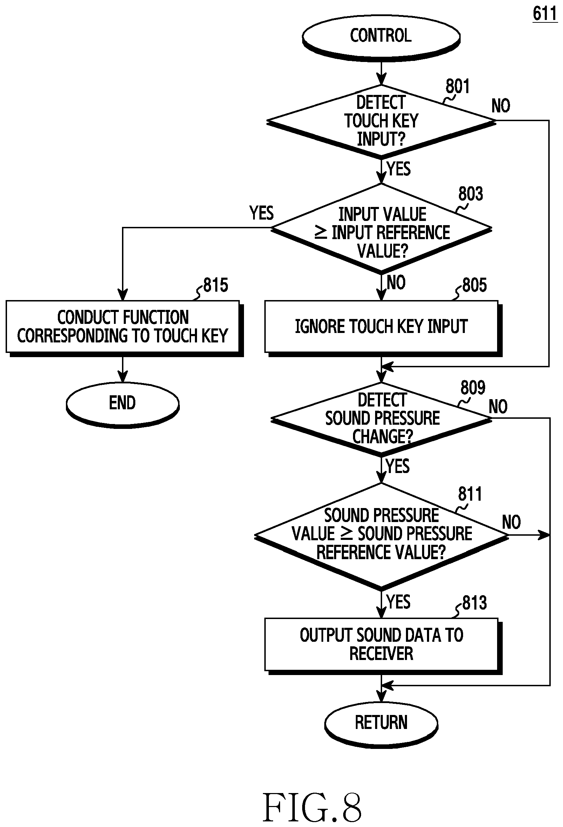

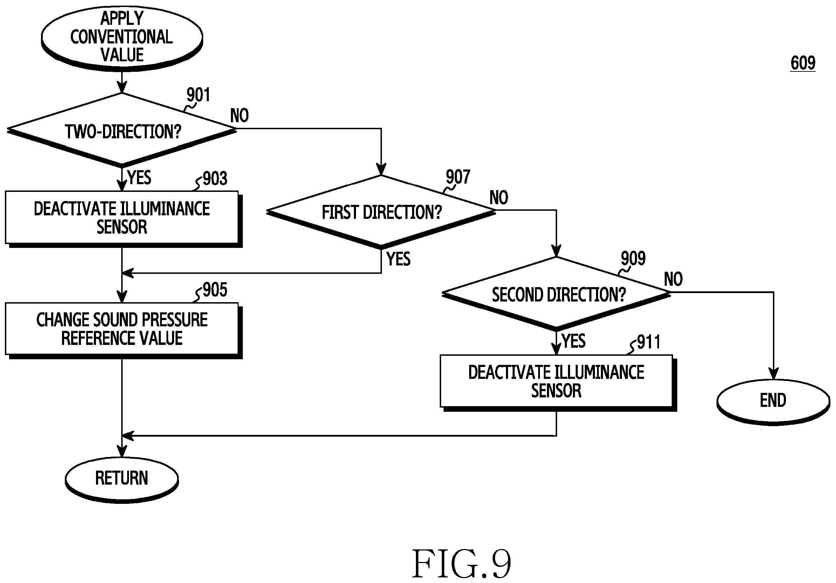

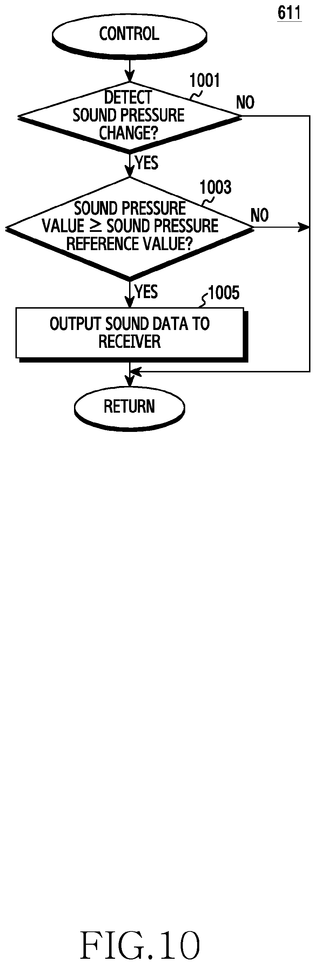

In operation 609, the control unit 570 can apply a reference value according to the grip. This shall be described in detail using FIG. 7 and FIG. 9. The control unit 570, which applies the reference value in operation 609, can perform operation 611. In operation 611, the control unit 570 can control the operation of the electronic device 500 according to the applied reference value. This shall be explained in detail with FIG. 8 and FIG. 10.

In operation 613, the control unit 570 can determine whether an end signal is received. When receiving the end signal in operation 613, the control unit 570 can finish the above process. When receiving no end signal in operation 613, the control unit 570 can return to operation 611. In so doing, the end signal can be at least one of a signal occurred by a menu key or a back key to stop the content execution, a signal occurred by a home button to stop the content execution, and a signal occurred when the electronic device 500 of the landscape mode is switched to the portrait mode.

FIG. 7 is a flowchart of an operation method for applying a reference value according to a grip according to an embodiment of the present invention.

Referring to FIG. 1, FIG. 2, FIG. 6, and FIG. 7, in operation 701, the control unit 570 can determine whether the grip detected in operation 607 is a two-direction grip. The two-direction grip can indicate that the electronic device 100 of a landscape mode is grabbed with both hands as shown in FIG. 2A. For the two-direction grip in operation 701, the control unit 570 can perform operation 703. In operation 703, the control unit 570 can change an input reference value of a touch key. In so doing, the electronic device 500 (e.g., the electronic device 100 of FIG. 1 and FIG. 2) can include a menu key and a back key which are touch keys as shown in FIG. 1 and FIG. 2. For example, to execute functions corresponding to the menu key and the back key, the electronic device 500 can change the input reference value of the electronic device 500 from 3000 to 10000. By changing the input reference value, the control unit 570 may not perform a function for an input of the touch key which can occur by the grip of the electronic device 500 regardless of a user's intention.

In operation 705, the control unit 570 can change the reference value to zero by deactivating an illuminance sensor of the electronic device 500. By deactivating the illuminance sensor, the control unit 570 may not control brightness of the display unit 540 which can occur by the grip of the electronic device 500 regardless of a user's intention. In so doing, while the illuminance sensor is deactivated to ease the explanations, the present invention is not limited thereto. The illuminance sensor may be a sensor which integrates a proximity sensor and an illuminance sensor.

In operation 707, the control unit 570 can change a sound pressure reference value. The control unit 570 can change a reference for a sound pressure value occurring when the speaker 564 of the electronic device 500 is covered by the grip of the electronic device 500, to the sound pressure reference value having a specific threshold. When the speaker 564 is covered by the grip of the electronic device 500 and the sound pressure value exceeds the sound pressure reference value, the control unit 570 can output sound data of content, to the receiver 566 of the electronic device 500. Thus, volume reduction of the sound data, which is experienced by the user, can be compensated. The control unit 570 conducting operation 707 can return to operation 611 of FIG. 6. While operation 703 through operation 705 are conducted in sequence by way of example in the embodiment of the present invention, it is not limited to this. Operation 703 through operation 705 can be executed regardless of the order.

For no two-direction grip in operation 701, the control unit 570 can perform operation 709. In operation 709, the control unit 570 can determine whether the grip detected in operation 607 is a first direction grip. The first direction grip can indicate a state where the left hand holds the region of the touch key as shown in FIG. 2B. For the first direction grip in operation 709, the control unit 570 can conduct operation 711. The control unit 570 can change the input reference value of the touch key in operation 711, and the control unit 570 can change the sound pressure value in operation 713. In so doing, operation 711 and operation 713 have been described in detail in operation 703 and operation 707 respectively, and accordingly shall not be further mentioned. After operation 713, the control unit 570 can return to operation 611 of FIG. 6.

For no first direction grip in operation 709, the control unit 570 can perform operation 715. In operation 715, the control unit 570 can determine whether the grip detected in operation 607 is a second direction grip. The second direction grip can indicate a state where the right hand holds the region of the illuminance sensor as shown in FIG. 2C. For the second direction grip in operation 715, the control unit 570 can conduct operation 717. In operation 717, the control unit 570 can change the reference value by deactivating the illuminance sensor of the electronic device 500. Operation 717 has been described in detail in operation 705 and thus shall not be further explained. After operation 717, the control unit 570 can return to operation 611 of FIG. 6.

For no second direction grip in operation 715, the control unit 570 can finish the process.

FIG. 8 is a flowchart of an operation method for controlling an electronic device according to a reference value applied according to an embodiment of the present invention.

Referring to FIG. 1, FIG. 2, and FIG. 6 through FIG. 8, in a landscape mode with a grip detected, the control unit 570 can detect an input of a touch key in operation 801. When detecting the input of the touch key in operation 801, the control unit 570 can perform operation 801. When not detecting the input of the touch key in operation 801, the control unit 570 can conduct operation 809.

In operation 803, the control unit 570 can determine whether an input value corresponding to the input detected at the touch key exceeds the input reference value which is changed in operation 701 of FIG. 7. When the input value exceeds the input reference value in operation 803, the control unit 570 can perform operation 815. In operation 815, the control unit 570 can execute a function corresponding to the touch key of the detected input. For example, when the input value of the menu key or the back key is a value exceeding the input reference value of 10000, the control unit 570 can execute the function corresponding to the menu key or the back key.

When the input value falls below the input reference value in operation 803, the control unit 570 can perform operation 805. In operation 805, the control unit 570 can ignore the input detected at the touch key. For example, when the input value of the menu key or the back key is a value below the input reference value of 10000, the control unit 570 can ignore the input and continuously display screen data of the executed content.

In operation 809, the control unit 570 can detect a sound pressure change. In the landscape mode with the grip detected, the control unit 570 can detect the sound pressure change occurred at the speaker 564 by the sound data output from the speaker, in real time or on a periodic basis. When detecting the sound pressure change in operation 809, the control unit 570 can conduct operation 811. In operation 811, the control unit 570 can determine whether the changed sound pressure value exceeds the sound pressure reference value which is changed in operation 705 of FIG. 7. When the changed sound pressure value falls below the sound pressure reference value in operation 811, the control unit 570 can return to operation 613 of FIG. 6.

When the changed sound pressure value exceeds the sound pressure reference value in operation 811, the control unit 570 can conduct operation 813. In operation 813, the control unit 570 can output content sound data which is being output to the speaker 564, to the receiver 566 of the electronic device 500. For example, when the sound pressure value of the speaker 564 exceeds the sound pressure reference value while outputting the sound data of the content to the speaker 564, the control unit 570 can determine that the speaker 564 of the electronic device 500 is covered by the grip. The control unit 570 can output the sound data to the speaker 564 and output the sound data through the receiver 566 in order to compensate for the volume of the sound data,.

FIG. 9 is a flowchart of an operation method for applying a reference value according to a grip according to another embodiment of the present invention.

Referring to FIG. 3, FIG. 4, FIG. 6, and FIG. 9, in operation 901, the control unit 570 can determine whether the grip detected in operation 607 is a two-direction grip. The two-direction grip can indicate a status where two hands holds the electronic device 300 in the landscape mode as shown in FIG. 4A. For the two-direction grip in operation 901, the control unit 570 can perform operation 903. In operation 903, the control unit 570 can change a reference value to zero by deactivating an illuminance sensor of the electronic device 500 (e.g., the electronic device 300 of FIG. 3 and FIG. 4). In so doing, the electronic device 500 can include only a home button, without the touch key, as shown in FIG. 3 and FIG. 4. The control unit 570 can deactivate the illuminance sensor and thus may not control brightness of the display unit 540, which can occur according to the grip of the electronic device 500 regardless of a user's intention. At this time, while the illuminance sensor is deactivated to ease the explanations in the present invention, it is not limited to this. The illuminance sensor can be a sensor integrating a proximity sensor and an illuminance sensor.

In operation 905, the control unit 570 can change a sound pressure reference value. The control unit 570 can change a reference for a sound pressure value occurring when the speaker 564 of the electronic device 500 is covered by the grip of the electronic device 500, from zero to the sound pressure reference value having a specific threshold. When the speaker 564 is covered by the grip of the electronic device 500 and the sound pressure value exceeds the sound pressure reference value, the control unit 570 can output sound data of content, to the receiver 566 of the electronic device 500. Thus, volume reduction of the sound data, which is experienced by the user, can be compensated. The control unit 570 conducting operation 905 can return to operation 611 of FIG. 6. While operation 903 and operation 905 are performed in sequence by way of example in the embodiment of the present invention, it is not limited to this. Operation 903 and operation 905 can be executed regardless of the order.

For no two-direction grip in operation 901, the control unit 570 can perform operation 907. In operation 907, the control unit 570 can determine whether the grip detected in operation 607 is a first direction grip. The first direction grip can indicate a state where the left hand holds the region of the speaker as shown in FIG. 4B. For the first direction grip in operation 907, the control unit 570 can conduct operation 905.

For no first direction grip in operation 907, the control unit 570 can perform operation 909. In operation 909, the control unit 570 can determine whether the grip detected in operation 607 is a second direction grip. The second direction grip can indicate a state where the right hand holds the region of the illuminance sensor as shown in FIG. 4C. For the second direction grip in operation 909, the control unit 570 can conduct operation 911. In operation 911, the control unit 570 can change the reference value by deactivating the illuminance sensor of the electronic device 500. Operation 911 has been described in detail in operation 903 and thus shall not be further explained. After operation 911, the control unit 570 can return to operation 611 of FIG. 6.

For no second direction grip in operation 909, the control unit 570 can finish the process.

FIG. 10 is a flowchart of an operation method for controlling an electronic device according to a reference value applied according to another embodiment of the present invention.

Referring to FIG. 3, FIG. 4, FIG. 6, and FIG. 9, and FIG. 10, in a landscape mode with a grip detected, the control unit 570 can detect a sound pressure change occurring at the speaker 564, in real time or on a periodic basis in operation 1001. Upon detecting the sound pressure change in operation 1001, the control unit 570 can conduct operation 1003. In operation 1003, the control unit 570 can determine whether the changed sound pressure value exceeds the sound pressure reference value which is changed in operation 903 of FIG. 9. When the changed sound pressure value falls below the sound pressure reference value in operation 1003, the control unit 570 can return to operation 613 of FIG. 6.

When the changed sound pressure value exceeds the sound pressure reference value in operation 1003, the control unit 570 can conduct operation 1005. In operation 1005, the control unit 570 can output sound data of content which is being output to the speaker 564, to the receiver 566 of the electronic device 500. For example, when the sound pressure value of the speaker 564 exceeds the sound pressure reference value while outputting the sound data for the content to the speaker 564, the control unit 570 can determine that the speaker 564 of the electronic device 500 is covered by the grip. The control unit 570 can output the sound data to the speaker 564 and output the sound data through the receiver 566 in order to compensate for volume of the sound data,

Identify the landscape mode can be identified using at least one of information on the content or sensing information acquired by a sensor of the electronic device 500.

The embodiments of the present invention disclosed in the specification and drawings merely present specific examples to easily explain technical details according to embodiments of the present invention and to ease the understanding of the embodiments of the present invention, and do not limit the range of the embodiments of the present invention. That is, it is apparent to those skilled in the art that modifications and variations based on the technical concept of the present invention can be made. The scope of the invention is defined by the appended claims.

## Claims

1. An operation method of an electronic device (100), comprising:
determining whether the electronic device (100) is in a landscape mode;
when the electronic device (100) is in the landscape mode, detecting a grip direction; and
according to the detected grip direction:
when a first direction grip is detected, changing a sound pressure reference value for a speaker (164);
when a second direction grip is detected, changing a reference value for an illuminance sensor (120); and
when a two-direction grip is detected, changing both the sound pressure reference value for the speaker (164) and the reference value for the illuminance sensor (120);
wherein the first direction grip is indicative of a state where a user grips a region of the speaker (364) in a first end of the electronic device (100), the second direction grip is indicative of a state where a user grips a region of the illuminance sensor (320) in a second end of the electronic device (100), and the two-direction grip is indicative of a state where a user grips both a region of the speaker (364) in the first end of the electronic device and a region of the illuminance sensor (320) in the second end of the electronic device (100).

2. The method of claim 1, further comprising:
controlling the electronic device (100) with the reference value or the sound pressure reference value.

3. The method of claim 2, wherein changing the reference value comprises deactivating the illuminance sensor (120).

4. The method of claim 2, further comprising when the first direction grip or the two-direction grip is detected, changing an input reference value for at least one touch key (130).

5. The method of claim 3, wherein controlling the electronic device (100) comprises maintaining brightness of a display unit (540) according to deactivation of the illuminance sensor (120).

6. An electronic device (100) comprising:
a speaker (164);
an illuminance sensor (120); and
a control unit (570) configured to:
determine whether the electronic device (100) is in a landscape mode,
when the electronic device (100) is in a landscape mode, detect a grip direction, and
according to the detected grip direction:
when a first direction grip is detected, change a sound pressure reference value for the speaker (164), and
when a second direction grip is detected, change a reference value for the illuminance sensor (120); and
when a two-direction grip is detected, changing both the sound pressure reference value for the speaker (164) and the reference value for the illuminance sensor (120);
wherein the first direction grip is indicative of a state where a user grips a region of the speaker (364) in a first end of the electronic device (100), the second direction grip is indicative of a state where a user grips a region of the illuminance sensor (320) in a second end of the electronic device (100), and the two-direction grip is indicative of a state where a user grips a region of the speaker (364) in the first end of the electronic device and a region of the illuminance sensor (320) in the second end of the electronic device (100).

7. The electronic device (100) of claim 6, wherein the control unit is configured to control the electronic device (100) with the reference value or sound pressure reference value.

8. The electronic device (100) of claim 7, wherein the control unit is configured to change the reference value by deactivating the illuminance sensor (120).

9. The electronic device (100) of claim 8, comprising at least one touch key (130), and
wherein the control unit is configured to change an input reference value for the at least one touch key (130) when the first direction grip or the two-direction grip is detected.

10. The electronic device (100) of claim 8, wherein the electronic device (100) further comprises a display (540), and
wherein the control unit is configured to maintain brightness of the display (540) according to deactivation of the illuminance sensor (120).

11. The electronic device (100) of claim 7, wherein the electronic device comprises a speaker, wherein the input sensor comprises a sensor which detects sound pressure of the speaker, and wherein the control unit is configured to change a sound pressure reference value for the sound pressure of the speaker, and
wherein the electronic device (100) further comprises a receiver (166), and
wherein the control unit is configured to:
detect a change of a sound pressure value at the speaker (164), and
output sound data of the content when the sound pressure value exceeds the sound pressure reference value.

## Patentansprüche

1. Bedienungsverfahren eines elektronischen Geräts (100), umfassend:
Bestimmen, ob sich das elektronische Gerät (100) in einem Querformat-Modus befindet;
wenn sich das elektronische Gerät (100) in dem Querformat-Modus befindet, Erfassen einer Griffrichtung; und
entsprechend der erfassten Griffrichtung:
wenn ein Griff in eine erste Richtung erfasst wird, Ändern eines Schalldruckreferenzwertes für einen Lautsprecher (164);
wenn ein Griff in eine zweite Richtung erfasst wird, Ändern eines Referenzwerts für einen Beleuchtungsstärkesensor (120); und
wenn ein Griff in zwei Richtungen erfasst wird, Ändern sowohl des Schalldruckreferenzwerts für den Lautsprecher (164) als auch des Referenzwerts für den Beleuchtungsstärkesensor (120);
wobei der Griff in die erste Richtung für einen Zustand bezeichnend ist, in dem ein Benutzer einen Bereich des Lautsprechers (364) in einem ersten Ende des elektronischen Geräts (100) ergreift, der Griff in die zweite Richtung für einen Zustand bezeichnend ist, in dem ein Benutzer einen Bereich des Beleuchtungsstärkesensors (320) in einem zweiten Ende des elektronischen Geräts (100) ergreift, und der Griff in zwei Richtungen für einen Zustand bezeichnend ist, in dem ein Benutzer sowohl einen Bereich des Lautsprechers (364) in dem ersten Ende des elektronischen Geräts als auch einen Bereich des Beleuchtungsstärkesensors (320) in dem zweiten Ende des elektronischen Geräts (100) ergreift.

2. Verfahren nach Anspruch 1, ferner umfassend:
Steuern des elektronischen Geräts (100) mit dem Referenzwert oder dem Schalldruckreferenzwert.

3. Verfahren nach Anspruch 2, wobei das Ändern des Referenzwerts das Deaktivieren des Beleuchtungsstärkesensors (120) umfasst.

4. Verfahren nach Anspruch 2, ferner umfassend, wenn der Griff in die erste Richtung oder der Griff in zwei Richtungen erfasst wird, Ändern eines Eingabereferenzwerts für mindestens eine Berührungstaste (130).

5. Verfahren nach Anspruch 3, wobei das Steuern des elektronischen Geräts (100) das Aufrechterhalten der Helligkeit einer Anzeigeeinheit (540) gemäß der Deaktivierung des Beleuchtungsstärkesensors (120) umfasst.

6. Elektronisches Gerät (100), umfassend:
einen Lautsprecher (164);
einen Beleuchtungsstärkesensor (120); und
eine Steuereinheit (570), die zu Folgendem konfiguriert ist:
Bestimmen, ob sich das elektronische Gerät (100) in einem Querformat-Modus befindet,
wenn sich das elektronische Gerät (100) in einem Querformat-Modus befindet, Erfassen einer Griffrichtung, und
entsprechend der erfassten Griffrichtung:
wenn ein Griff in eine erste Richtung erfasst wird, Ändern eines Schalldruckreferenzwerts für den Lautsprecher (164), und
wenn ein Griff in eine zweite Richtung erfasst wird, Ändern eines Referenzwerts für den Beleuchtungsstärkesensor (120); und
wenn ein Griff in zwei Richtungen erfasst wird, Änderung sowohl des Schalldruckreferenzwerts für den Lautsprecher (164) als auch des Referenzwerts für den Beleuchtungsstärkesensor (120);
wobei der Griff in die erste Richtung für einen Zustand bezeichnend ist, in dem ein Benutzer einen Bereich des Lautsprechers (364) in einem ersten Ende des elektronischen Geräts (100) ergreift, der Griff in die zweite Richtung für einen Zustand bezeichnend ist, in dem ein Benutzer einen Bereich des Beleuchtungsstärkesensors (320) in einem zweiten Ende des elektronischen Geräts (100) ergreift, und der Griff in zwei Richtungen für einen Zustand bezeichnend ist, in dem ein Benutzer einen Bereich des Lautsprechers (364) in dem ersten Ende des elektronischen Geräts und einen Bereich des Beleuchtungsstärkesensors (320) in dem zweiten Ende des elektronischen Geräts (100) ergreift.

7. Elektronisches Gerät (100) nach Anspruch 6, wobei die Steuereinheit dazu konfiguriert ist, das elektronische Gerät (100) mit dem Referenzwert oder Schalldruckreferenzwert zu steuern.

8. Elektronisches Gerät (100) nach Anspruch 7, wobei die Steuereinheit dazu konfiguriert ist, den Referenzwert durch Deaktivieren des Beleuchtungsstärkesensors (120) zu ändern.

9. Elektronisches Gerät (100) nach Anspruch 8, umfassend mindestens eine Berührungstaste (130), und
wobei die Steuereinheit dazu konfiguriert ist, einen Eingabereferenzwert für die mindestens eine Berührungstaste (130) zu ändern, wenn der Griff in die erste Richtung oder der Griff in zwei Richtungen erfasst wird.

10. Elektronisches Gerät (100) nach Anspruch 8, wobei das elektronische Gerät (100) ferner eine Anzeige (540) umfasst, und
wobei die Steuereinheit dazu konfiguriert ist, die Helligkeit der Anzeige (540) gemäß der Deaktivierung des Beleuchtungsstärkesensors (120) aufrechtzuerhalten.

11. Elektronisches Gerät (100) nach Anspruch 7, wobei das elektronische Gerät einen Lautsprecher umfasst, wobei der Eingangssensor einen Sensor umfasst, der den Schalldruck des Lautsprechers erfasst, und wobei die Steuereinheit dazu konfiguriert ist, einen Schalldruckreferenzwert für den Schalldruck des Lautsprechers zu ändern, und
wobei das elektronische Gerät (100) ferner einen Empfänger (166) umfasst, und
wobei eine Steuereinheit zu Folgendem konfiguriert ist:
Erfassen einer Änderung eines Schalldruckwerts an dem Lautsprecher (164) und
Ausgabe der Schalldaten des Inhalts, wenn der Schalldruckwert den Schalldruckreferenzwert überschreitet.

## Revendications

1. Procédé d'exploitation d'un dispositif électronique (100), comprenant :
la détermination si le dispositif électronique (100) est en mode paysage ;
lorsque le dispositif électronique (100) est en mode paysage, la détection d'une direction de prise ; et
en fonction de la direction de prise détectée :
lorsqu'une prise dans une première direction est détectée, la modification d'une valeur de référence de pression acoustique pour un haut-parleur (164) ;
lorsqu'une prise dans une deuxième direction est détectée, la modification d'une valeur de référence pour un capteur d'éclairement (120) ; et
lorsqu'une prise bidirectionnelle est détectée, la modification à la fois de la valeur de référence de pression acoustique pour le haut-parleur (164) et de la valeur de référence pour le capteur d'éclairement (120) ;
dans lequel la prise dans une première direction indique un état dans lequel un utilisateur tient une région du haut-parleur (364) au niveau d'une première extrémité du dispositif électronique (100), la prise dans une deuxième direction indique un état dans lequel un utilisateur tient une région du capteur d'éclairement (320) au niveau d'une seconde extrémité du dispositif électronique (100), et la prise bidirectionnelle indique un état dans lequel un utilisateur tient à la fois une région du haut-parleur (364) au niveau de la première extrémité du dispositif électronique et une région du capteur d'éclairement (320) au niveau de la seconde extrémité du dispositif électronique (100).

2. Procédé selon la revendication 1, comprenant en outre :
la commande du dispositif électronique (100) avec la valeur de référence ou la valeur de référence de pression acoustique.

3. Procédé selon la revendication 2, dans lequel la modification de la valeur de référence comprend la désactivation du capteur d'éclairement (120).

4. Procédé selon la revendication 2, comprenant en outre, lorsque la prise dans une première direction ou la prise bidirectionnelle est détectée, la modification d'une valeur de référence d'entrée pour au moins une touche tactile (130).

5. Procédé selon la revendication 3, dans lequel la commande du dispositif électronique (100) comprend le maintien de la luminosité d'une unité d'affichage (540) en fonction de la désactivation du capteur d'éclairement (120).

6. Dispositif électronique (100) comprenant :
un haut-parleur (164) ;
un capteur d'éclairement (120) ; et
une unité de commande (570) configurée pour :
déterminer si le dispositif électronique (100) est en mode paysage,
lorsque le dispositif électronique (100) est en mode paysage, détecter une direction de prise, et
en fonction de la direction de prise détectée :
lorsqu'une prise dans une première direction est détectée, modifier une valeur de référence de pression acoustique pour le haut-parleur (164), et
lorsqu'une prise dans une deuxième direction est détectée, modifier une valeur de référence pour le capteur d'éclairement (120) ; et
lorsqu'une prise bidirectionnelle est détectée, la modification à la fois de la valeur de référence de pression acoustique pour le haut-parleur (164) et de la valeur de référence pour le capteur d'éclairement (120) ;
dans lequel la prise dans une première direction indique un état dans lequel un utilisateur tient une région du haut-parleur (364) au niveau d'une première extrémité du dispositif électronique (100), la prise dans une deuxième direction indique un état dans lequel un utilisateur tient une région du capteur d'éclairement (320) au niveau d'une seconde extrémité du dispositif électronique (100), et la prise bidirectionnelle indique un état dans lequel un utilisateur tient une région du haut-parleur (364) au niveau de la première extrémité du dispositif électronique et une région du capteur d'éclairement (320) au niveau de la seconde extrémité du dispositif électronique (100).

7. Dispositif électronique (100) selon la revendication 6, dans lequel l'unité de commande est configurée pour commander le dispositif électronique (100) avec la valeur de référence ou la valeur de référence de pression acoustique.

8. Dispositif électronique (100) selon la revendication 7, dans lequel l'unité de commande est configurée pour modifier la valeur de référence en désactivant le capteur d'éclairement (120).

9. Dispositif électronique (100) selon la revendication 8, comprenant au moins une touche tactile (130), et
dans lequel l'unité de commande est configurée pour modifier une valeur de référence d'entrée pour l'au moins une touche tactile (130) lorsque la prise dans une première direction ou la prise bidirectionnelle est détectée.

10. Dispositif électronique (100) selon la revendication 8, dans lequel le dispositif électronique (100) comprend en outre un affichage (540), et
dans lequel l'unité de commande est configurée pour maintenir la luminosité de l'affichage (540) selon la désactivation du capteur d'éclairement (120).

11. Dispositif électronique (100) selon la revendication 7, dans lequel le dispositif électronique comprend un haut-parleur, dans lequel le capteur d'entrée comprend un capteur qui détecte la pression acoustique du haut-parleur, et dans lequel l'unité de commande est configurée pour modifier une valeur de référence de pression acoustique pour la pression acoustique du haut-parleur, et
dans lequel le dispositif électronique (100) comprend en outre un récepteur (166), et
dans lequel l'unité de commande est configurée pour :
détecter une modification d'une valeur de pression acoustique au niveau du haut-parleur (164), et
émettre des données acoustiques du contenu lorsque la valeur de pression acoustique dépasse la valeur de référence de pression acoustique.
